# EUROPÄISCHE PATENTSCHRIFT

(11) **EP 1 384 814 B1**
(45) Veröffentlichungstag und Bekanntmachung des Hinweises auf die Patenterteilung: **11.04.2007**
(21) Anmeldenummer: 03450157.7
(22) Anmeldetag: 25.06.2003
(51) Int. Cl.: E01B 27/00, E01B 27/02

(54) **Speicherwagen mit einer Tasteinrichtung**
Wagon for transporting bulk material with a sensing mechanism
Wagon pour transporter des matériaux en vrac avec un détecteur

(30) Priorität: 23.07.2002 AT 4952002 U
(43) Veröffentlichungstag der Anmeldung: 28.01.2004
(73) Patentinhaber: Franz Plasser Bahnbaumaschinen-Industriegesellschaft m.b.H., 1010 Wien (AT)
(72) Erfinder: Theurer, Josef, A-1010 Wien (AT); Wörgötter, Herbert, A-4210 Gallneukirchen (AT)

(56) Entgegenhaltungen:
- EP-A- 0 429 713
- DE-A- 19 726 554
- RU-C- 2 042 760

## Beschreibung

Die Erfindung betrifft einen Speicherwagen für Schüttgut, mit einem auf Schienenfahrwerken verfahrbaren, ein in Wagenlängsrichtung verlaufendes Bodenförderband aufweisenden Ladecontainer und mit einem an das Bodenförderband anschließenden, über ein vorderes Wagenende vorkragenden Übergabeförderband zur Weitergabe von gespeichertem Schüttgut auf einen vorgeordneten, weiteren Speicherwagen, sowie mit einer im Ladecontainer angeordneten Tasteinrichtung zur Erfassung des Befüllungszustandes.

Gemäß EP 0 429 713 B1 ist bereits ein derartiger Speicherwagen bekannt, der im Arbeitseinsatz mit einer beliebigen Anzahl gleichartiger Wagen zu einem Verladezug gekuppelt werden kann. Im bezüglich einer Transportrichtung der Förderbänder vorderen Bereich des Ladecontainers jedes Speicherwagens ist eine Tasteinrichtung angeordnet, die als Lichtschranke oder als mechanischer Taster ausgebildet ist und beim Speicherungsvorgang das Erreichen des maximalen Befüllungszustandes überwacht.

Die Aufgabe der vorliegenden Erfindung liegt nun in der Schaffung eines Speicherwagens der gattungsgemäßen Art, mit dem eine vereinfachte Befüllung erzielbar ist.

Erfindungsgemäß wird diese Aufgabe mit einem Speicherwagen der eingangs genannten Art dadurch gelöst, daß die Tasteinrichtung im bezüglich einer Transportrichtung des Bodenförderbandes hinteren Ende des Ladecontainers zur Erfassung einer maximalen Ladehöhe eines - durch das vom Übergabeförderband eines nachgeordneten Speicherwagens abgeworfene Schüttgut gebildeten - Schüttkegels angeordnet ist.

Mit einem derart ausgebildeten Speicherwagen ist es nun möglich, das Schüttgut im Ladecontainer automatisch exakt bis zu einer maximalen Füllhöhe zu speichern und so die Ladekapazität des Wagens optimal auszunutzen. Durch die Anordnung der Tasteinrichtung im hinteren Ende des Containers kann zuverlässig sichergestellt werden, daß der im Container in Transportrichtung nach vorwärts bewegte bzw. in die Länge wachsende Schüttgutkegel immer eine gleichmäßige Höhe aufweist. Auf Schwankungen in der Menge des zugeführten Schüttgutes kann sofort reagiert und die Transportgeschwindigkeit des Bodenförderbandes entsprechend reguliert werden, um trotzdem eine gleichmäßige Befüllung zu erreichen. Dabei erübrigt sich ein von der Aufmerksamkeit einer Bedienungsperson abhängiger Befüllungsablauf.

Wenn die Tasteinrichtung gemäß Anspruch 2 mit einer zur Erfassung eines Transportweges des Bodenförderbandes ausgebildeten Wegmeßeinrichtung verbunden ist, so wird der Ladevorgang automatisch unter maximaler Befüllung gestoppt.

Weitere Vorteile und Ausbildungen der Erfindung ergeben sich aus den Unteransprüchen und der Zeichnung.

Im folgenden wird die Erfindung anhand eines in der Zeichnung dargestellten Ausführungsbeispieles näher beschrieben.

Es zeigen:
Fig. 1 eine Seitenansicht einer aus mehreren erfindungsgemäß ausgebildeten Speicherwagen zusammengesetzten Anlage zum Schüttguttransport, und
Fig. 2 eine vergrößerte Seitenansicht der Speicherwagen.

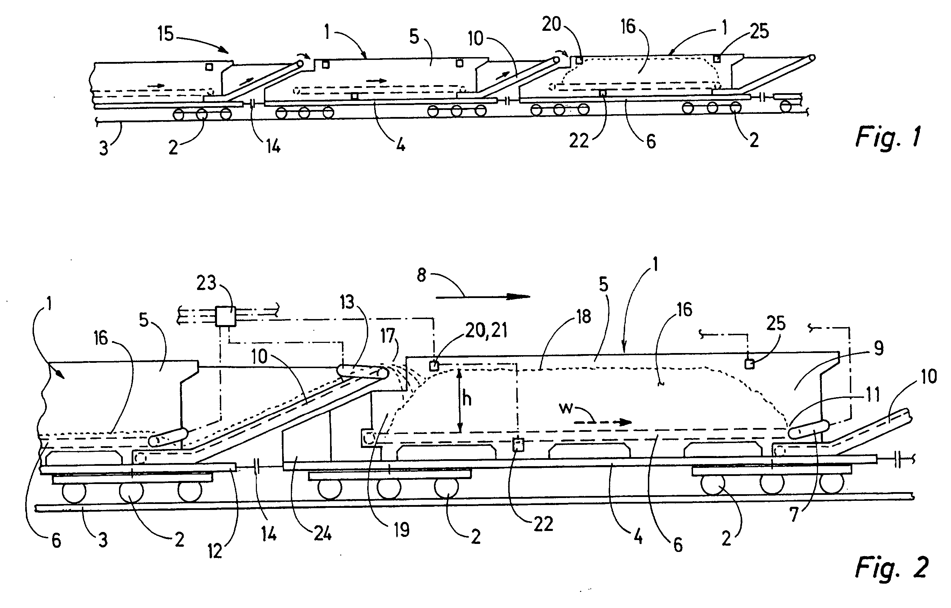

Ein in den Fig. 1 und 2 dargestellter Speicherwagen 1 besteht im wesentlichen aus einem - über zwei Schienenfahrwerke 2 auf einem Gleis 3 verfahrbaren - Wagenrahmen 4 und einem mit diesem verbundenen Ladecontainer 5. Ein in Wagenlängsrichtung verlaufendes Bodenförderband 6 bildet die Bodenfläche des Ladecontainers 5 und weist einen Antrieb 7 zur Beaufschlagung in einer Transportrichtung 8 auf. Am bezüglich dieser Transportrichtung 8 vorderen Ende 9 des Ladecontainers 5 ist ein Übergabeförderband 10 vorgesehen, das unterhalb eines Abwurfendes 11 des Bodenförderbandes 6 an dieses anschließend am Wagenrahmen 4 gelagert ist. Das Übergabeförderband 10 ist schräg nach oben führend über ein vorderes Wagenende 12 vorkragend ausgebildet sowie mit einem Antrieb 13 ausgestattet.

Wie insbesonders in Fig. 1 zu erkennen, ist eine beliebige Anzahl von gleichartig ausgebildeten Speicherwagen 1 anhand von Kupplungseinrichtungen 14 zu einer auf dem Gleis 3 verfahrbaren Anlage 15 kuppelbar, mit der Schüttgut 16 gespeichert und/oder transportiert werden kann. Bei einer derartigen Aneinanderkupplung von Speicherwagen 1 bilden die einander endseitig überlappenden Boden- und Übergabeförderbänder 6,10 der einzelnen Wagen eine durchgehende Förderbandstraße, wobei das Schüttgut 16 jeweils von einem Abwurfende 17 eines Übergabeförderbandes 10 auf das Bodenförderband 6 des in Transportrichtung vorgeordneten Speicherwagens 1 weitergegeben wird. Bei höherer Transportgeschwindigkeit der Förderbänder 6,10 wird das Schüttgut 16 durch die Ladecontainer 5 lediglich in Längsrichtung der Anlage 15 durchtransportiert. Wird hingegen der Antrieb 7 eines Bodenförderbandes 6 auf langsame Umlaufgeschwindigkeit geschaltet, so kommt es dadurch zur Bildung eines Schüttkegels 18 und dementsprechend zur Speicherung des Schüttgutes 16 in diesem Ladecontainer 5.

Im bezüglich der Transportrichtung 8 hinteren Ende 19 des Ladecontainers 5 ist eine Tasteinrichtung 20 vorgesehen, die zur laufenden Erfassung des Befüllungszustandes des Speicherwagens 1 dient. Die Tasteinrichtung 20 ist als berührungslos wirkende Laserdistanzmeßvorrichtung 21 ausgebildet, die den durch das abgeworfene Schüttgut 16 gebildeten Schüttkegel 18 kontinuierlich abtastet und dabei die Ladehöhe h im Ladecontainer 5 erfaßt. (Als Alternative zur beschriebenen Ausführung wären auch andere Ausbildungen einer Tasteinrichtung denkbar, z.B. in Form einer Lichtschranke oder auch einer mechanisch betätigbaren Vorrichtung). Weiters ist der Speicherwagen 1 mit einer Wegmeßeinrichtung 22 ausgestattet, die zur Erfassung eines Transportweges w (in Fig. 2 als strichlierter Pfeil angedeutet) des Bodenförderbandes 6 ausgebildet und mit der Tasteinrichtung 20 verbunden ist. Die Wegmeßeinrichtungen 22, Tasteinrichtungen 20 sowie die - aus einer Kraftquelle 24 gespeisten - Förderband-Antriebe 7 und 13 der gesamten Anlage 15 stehen zudem mit einer zentralen Steuereinrichtung 23 in Verbindung.

Beim Arbeitseinsatz zum Speichern von Schüttgut 16 im Ladecontainer 5 des in Transportrichtung 8 an vorderster Stelle gezeigten Speicherwagens 1 ist der Antrieb 7 des Bodenförderbandes 6 dieses Wagens vorerst gestoppt oder auf sehr langsame Umlaufgeschwindigkeit geschaltet, während die Boden- und Übergabeförderbänder 6,10 der nachfolgenden Speicherwagen 1 mit höherer Geschwindigkeit zum Durchtransport des Schüttgutes 16 laufen. Dadurch wird im hinteren Ende 19 des zu befüllenden Ladecontainers 5 ein Schüttkegel 18 gebildet, dessen Ladehöhe h von der in diesem Bereich angeordneten Tasteinrichtung 20 überwacht wird. Bei Erreichen einer voreingestellten, maximalen Ladehöhe h durch das Schüttgut 16 wird über die Steuereinrichtung 23 der Antrieb des Bodenförderbandes 6 entsprechend beaufschlagt, um den Schüttkegel 18 so weit vorwärtszubewegen, daß die registrierte Ladehöhe h unterschritten wird und sich wiederum ein neuer Schüttkegel aufbaut.

Gleichzeitig wird anhand der Wegmeßeinrichtung 22 laufend der Transportweg w des Bodenförderbandes 6 gemessen und auf diese Weise erfaßt, wann der erste Schüttkegel 18 das vordere Ende 9 des Ladecontainers 5 erreicht hat und dieser daher zur Gänze bis zu der optimalen Ladehöhe h mit Schüttgut 16 befüllt ist. Sodann wird das Bodenförderband 6 automatisch angehalten, wobei allerdings berücksichtigt wird, im Ladecontainer 5 noch gerade so viel Speicherraum freizuhalten, um das zu diesem Zeitpunkt noch auf den Förderbändern 6 und 10 des nachfolgenden Speicherwagens befindliche Schüttgut aufnehmen zu können. Über die Steuereinrichtung 23 werden daraufhin die Antriebe 7 und 13 des angrenzenden, leeren Speicherwagens 1 automatisch auf Speicherbetrieb umgeschaltet.

Anstelle der Wegmeßeinrichtung 22 (bzw. eventuell auch zusätzlich zu dieser) kann auch eine zweite, im vorderen Ende 9 des Ladecontainers 5 positionierte Tasteinrichtung 25 zur Erfassung des vordersten bzw. ersten Schüttkegels 18 vorgesehen sein. Über die Steuereinrichtung 23 kann sodann das Bodenförderband 6 automatisch angehalten und auf Speicherbetrieb für den angrenzenden Wagen umgestellt werden. Zweckmäßigerweise sollte die Tasteinrichtung 25 so eingestellt sein, daß für die Aufnahme des noch auf den Förderbändern befindlichen Schüttguts genügend Speicherraum zur Verfügung steht.

## Patentansprüche

1. Speicherwagen (1) für Schüttgut (16), mit einem auf Schienenfahrwerken (2) verfahrbaren, ein in Wagenlängsrichtung verlaufendes Bodenförderband (6) aufweisenden Ladecontainer (5) und mit einem an das Bodenförderband (6) anschließenden, über ein vorderes Wagenende (12) vorkragenden Übergabeförderband (10) zur Weitergabe von gespeichertem Schüttgut (16) auf einen vorgeordneten, weiteren Speicherwagen (1), sowie mit einer im Ladecontainer (5) angeordneten Tasteinrichtung (20) zur Erfassung des Befüllungszustandes, **dadurch gekennzeichnet, daß** die Tasteinrichtung (20) im bezüglich einer Transportrichtung (8) des Bodenförderbandes (6) hinteren Ende (19) des Ladecontainers (5) zur Erfassung einer maximalen Ladehöhe (h) eines - durch das vom Übergabeförderband (10) eines nachgeordneten Speicherwagens (1) abgeworfene Schüttgut (16) gebildeten - Schüttkegels (18) angeordnet ist.

2. Speicherwagen nach Anspruch 1, **dadurch gekennzeichnet, daß** die Tasteinrichtung (20) mit einer zur Erfassung eines Transportweges (w) des Bodenförderbandes (6) ausgebildeten Wegmeßeinrichtung (22) verbunden ist.

3. Speicherwagen nach Anspruch 1 oder 2, **dadurch gekennzeichnet, daß** die Tasteinrichtung (20) und /oder die Wegmeßeinrichtung (22) mit einer Steuereinrichtung (23) zur automatischen Beaufschlagung von Antrieben (7,13) des Boden- und Übergabeförderbandes (6,10) verbunden ist.

4. Speicherwagen nach Anspruch 3, **dadurch gekennzeichnet, daß** die Steuereinrichtung (23) zum automatischen Stoppen bzw. Umschalten auf langsame Geschwindigkeit der Antriebe (7,13) des Bodenförderbandes (6) und Übergabeförderbandes (10) des in Transportrichtung (8) nachgeordneten Speicherwagens (1) bei Erreichen eines voreingestellten Befüllungszustandes im Ladecontainer (5) ausgebildet ist.

5. Speicherwagen nach Anspruch 4, **dadurch gekennzeichnet, daß** die Tasteinrichtung (20) als berührungslos wirkende Laserdistanzmeßvorrichtung (21) ausgebildet ist.

6. Speicherwagen nach einem der Ansprüche 1 bis 5, **dadurch gekennzeichnet, daß** im bezüglich der Transportrichtung (8) vorderen Ende (9) des Ladecontainers (5) eine weitere Tasteinrichtung (25) zur Erfassung des Befüllungszustandes vorgesehen ist.

## Claims

1. A storage wagon (1) for bulk material (16), including a loading container (5) which is mobile on on-track undercarriages (2) and comprises a bottom conveyor belt (6) extending in the longitudinal direction of the wagon, and a transfer conveyor belt (10) for transferring stored bulk material (16) to a further, preceding storage wagon (1), the transfer conveyor belt (10) adjoining the bottom conveyor belt (6) and projecting over a front end (12) of the wagon, and also including a sensor device (20), arranged in the loading container (5), for detecting the filling state, **characterized in that** the sensor device (20) is arranged in the rear end (19) of the loading container (5), with regard to a transporting direction (8) of the bottom conveyor belt (6), for detecting a maximum loading height (h) of a dump cone (18) formed by the bulk material (16) discharged by the transfer conveyor belt (10) of a storage wagon (1) following behind.

2. A storage wagon according to claim 1, **characterized in that** the sensor device (20) is connected to a displacement measuring device (22) designed for detecting a transport path (w) of the bottom conveyor belt (6).

3. A storage wagon according to claim 1 or 2, **characterized in that** the sensor device (20) and/or the displacement measuring device (22) is connected to a control device (23) for automatic actuation of drives (7,13) of the bottom- and transfer conveyor belt (6,10).

4. A storage wagon according to claim 3, **characterized in that** the control device (23) is designed for automatically stopping or switching to slow speed the drives (7,13) of the bottom conveyor belt (6) and transfer conveyor belt (10) of the storage wagon (1) which follows behind in the transporting direction (8), as soon as a pre-set filling state in the loading container (5) has been attained.

5. A storage wagon according to claim 4, **characterized in that** the sensor device (20) is designed as a contactless laser distance measuring device (21).

6. A storage wagon according to one of claims 1 to 5, **characterized in that** a further sensor device (25) for detecting the filling state is provided in the front end (9), with regard to the transporting direction (8), of the loading container (5).

## Revendications

1. Wagon (1) pour transporter des matériaux en vrac (16) avec un conteneur de chargement (5) mobile sur des bogies (2), muni d'une bande transporteuse de fond (6) s'étendant dans la direction longitudinale du wagon et avec une bande transporteuse de transfert (10) raccordée à la bande transporteuse de fond (6), en saillie au-dessus d'une extrémité avant (12) du wagon, pour le transfert dans un autre wagon (1) précédent de matériaux en vrac (16) stockés, ainsi qu'avec un dispositif de palpeur (20) disposé dans le conteneur de chargement (5) pour la détection de l'état de remplissage, **caractérisé en ce que** le dispositif de palpeur (20) est disposé à l'extrémité arrière (19) du conteneur de chargement (5), par rapport à une direction de transport (8) de la bande transporteuse de fond (6), pour la détection d'une hauteur de chargement (h) maximale d'un cône de matériaux (18) formé par les matériaux en vrac (16) déposés par la bande transporteuse de transfert (10) d'un wagon (1) suivant.

2. Wagon selon la revendication 1, **caractérisé en ce que** le dispositif de palpeur (20) est relié à un dispositif de mesure de déplacement (22) conçu pour la détection d'un trajet de transport (w) de la bande transporteuse de fond (6).

3. Wagon selon la revendication 1 ou 2, **caractérisé en ce que** le dispositif de palpeur (20) et/ou le dispositif de mesure de déplacement (22) sont reliés à un dispositif de commande (23) pour l'actionnement automatique de moteurs (7, 13) des bandes transporteuses de fond et de transfert (6, 10).

4. Wagon selon la revendication 3, **caractérisé en ce que** le dispositif de commande (23) est conçu pour l'arrêt automatique ou la commutation automatique en vitesse lente des moteurs (7, 13) de la bande transporteuse de fond (6) et de la bande transporteuse de transfert (10) du wagon (1) suivant dans la direction de transport (8), lorsqu'un état de remplissage prédéterminé est atteint dans le conteneur de chargement (5).

5. Wagon selon la revendication 4, **caractérisé en ce que** le dispositif de palpeur (20) est réalisé sous la forme d'un dispositif de mesure de distance par laser sans contact (21).

6. Wagon selon l'une des revendications 1 à 5, **caractérisé en ce qu'**un autre dispositif de palpeur (25) est prévu à l'extrémité avant (9) du conteneur de chargement (5), par rapport à la direction de transport (8), pour la détection de l'état de remplissage.
